# EUROPEAN PATENT APPLICATION

(11) **EP 2 677 420 A1**
(43) Date of publication of application: **25.12.2013**
(21) Application number: 13171939.5
(22) Date of filing: 14.06.2013
(51) Int. Cl.: G06F 9/44

(54) **Method to boot up a mobile phone operating system by using a mobile memory card**

(30) Priority: 18.06.2012 CN 201210200091
(71) Applicant: Huawei Device Co., Ltd., Longgang District Shenzhen Guangdong 518129 (CN)
(72) Inventor: DANG, Jian, Shenzhen Guangdong 518129 (CN)
(74) Representative: Maiwald Patentanwalts GmbH

(57) **Abstract**

Embodiments of the present invention disclose a method and a terminal for using a mobile memory card to boot up a mobile phone operating system. The method according to the embodiments of the present invention includes: detecting whether a mobile memory card is available upon startup; if it is detected that a mobile memory card is available, detecting whether an operating system is available in the mobile memory card; and if it is detected that an operating system is available in the mobile memory card, loading the operating system to start up a terminal. The method according to the embodiments of the present invention implements the function of loading an operating system from a mobile memory card to start up a terminal, and compared with the prior art, does not require programming of the operating system in a flash memory; the user may simply download the operating system into the mobile memory card and then use it as an operating system to be loaded when the terminal starts up. The operation method is simple, and the user enjoys better experience.

## Description

### FIELD OF THE INVENTION

The present invention relates to the field of communications technologies, and in particular, to a method and a terminal for using a mobile memory card to boot up a mobile phone operating system.

### BACKGROUND OF THE INVENTION

Currently, a mobile phone operating system is programmed in a flash memory (Flash). One mobile phone may have multiple operating systems. When booting up, a mobile phone selects an operating system by reading it from the Flash. The multiple operating systems increase the cost of the Flash. Moreover, the currently available online upgrade is not practicable until the previous version of the operating system in the Flash is erased completely, and the user cannot retain the previous operating system. The disadvantages of the prior art are: The user cannot upgrade the operating system unless the Flash is re-programmed, the process is complicated, and the previously used operating system cannot be retained.

### SUMMARY OF THE INVENTION

Embodiments of the present invention provide a method and a terminal for using a mobile memory card to boot up a mobile phone operating system so that an operating system stored in the mobile memory card is booted up when a mobile phone starts up, which gives rise to a simple operation method and reduced costs.

An embodiment of the present invention provides a method for using a mobile memory card to boot up a mobile phone operating system. The method includes:
detecting, upon startup, whether a mobile memory card is available;
if it is detected that a mobile memory card is available, detecting whether an operating system is available in the mobile memory card; and
if it is detected that an operating system is available in the mobile memory card, loading the operating system to start up a terminal.

An embodiment of the present invention further provides a terminal, where the terminal includes a first detecting unit, a second detecting unit, and a loading unit.
the first detecting unit is configured to, upon startup, detect whether a mobile memory card is available;
the second detecting unit is configured to: if it is detected that a mobile memory card is available, detect whether an operating system is available in the mobile memory card; and
the loading unit is configured to: if it is detected that an operating system is available in the mobile memory card, load the operating system to start up the terminal.

It can be seen from the above technical solution that, the embodiments of the present invention detect whether a mobile memory card is available on a terminal and detect whether an operating system is stored in the mobile memory card, and load the operating system if the operating system is available. The method implements the function of loading an operating system from a mobile memory card to start up a terminal, and compared with the prior art, does not require programming of the operating system in a flash memory; the user may simply download the operating system into the mobile memory card and then use it as an operating system to be loaded when the terminal starts up. The operation method is simple, and the user enjoys better experience. Meanwhile, without necessity of programming multiple operating systems in a flash memory Flash, the terminal manufacturer's cost of purchasing the flash memory is saved.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from the accompanying drawings without creative efforts.

FIG. 1 is a simplified schematic flowchart of a method for using a mobile memory card to boot up a mobile phone operating system according to Embodiment 1 of the present invention;

FIG. 2 is a simplified schematic flowchart of a method for using a mobile memory card to boot up a mobile phone operating system according to Embodiment 2 of the present invention; and

FIG. 3 is a simplified schematic diagram of a terminal according to Embodiment 3 of the present invention.

### DETAILED DESCRIPTION OF THE EMBODIMENTS

An embodiment of the present invention provides a method for using a mobile memory card to boot up a mobile phone operating system, where the mobile memory card stores an operating system downloaded by a user, and the user may select to boot up the mobile phone operating system from the mobile memory card upon startup and hence enjoy better user experience.

### Embodiment 1

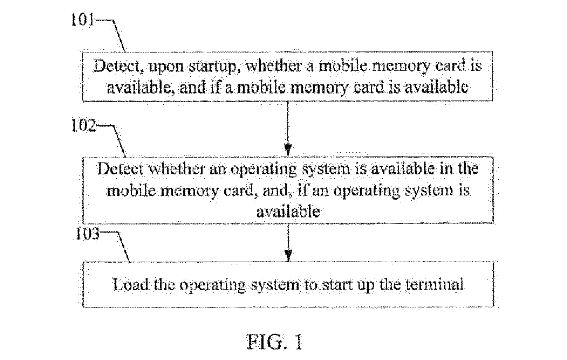

This embodiment of the present invention provides a method for using a mobile memory card to boot up a mobile phone operating system. As shown in FIG. 1, the method includes the following steps:

Step 101: A terminal detects, upon startup, whether a mobile memory card is available, and performs step 102 if a mobile memory card is available.

When a power key (that is, power key) of the terminal is pressed to start up the terminal, a reset (that is, reset) signal is sent to a chip. The chip starts execution from a 0 address. Generally, the 0 address corresponds to a boot code segment in a read-only memory (ROM, Read-Only Memory), and stores information such as basic initialization information. The operations for the boot code are the same as those in the prior art, and are not repeated here any further. After completion of running the initialization boot code segment, it is checked whether a mobile memory card is available. The mobile memory card may be a secure digital memory card (SD, Secure Digital Memory Card), a T-Flash (TF) card, or a multimedia card (MMC, Multimedia Card), and the like. The mobile memory card described here is only an example, but not an exhaustive description, for ease of understanding the embodiment of the present invention, and shall not be construed as a limitation to the embodiment of the present invention.

It should be noted that the terminal specifically may be, but is not limited to, a mobile phone, a tablet computer, and the like.

Step 102: Detect whether an operating system is available in the mobile memory card, and perform step 103 if an operating system is available.

In step 102, the detecting whether an operating system is available in the mobile memory card may be specifically as follows; Corresponding flag bits are generated on a segment of address bits in a fixed storage location on an SD card when an operating system is downloaded to the SD card, and the detection may be performed by directly checking whether the flag bits exist on a segment of address bits on the SD card, and if the flag bits exist, it is deemed that the operating system code is available.

If it is detected in step 102 that an operating system is stored in the mobile memory card (specifically, it may be detected that code of the operating system is stored), the terminal can load the operating system ; if code of multiple operating systems is available in the mobile memory card, the terminal may give a prompt to the user and allow the user to select a desired operating system. If it is detected in step 102 that no operating system is available in the mobile memory card, the method ends, or the terminal may select an operating system programmed in a tlash memory of the terminal.

Step 103: Load the operating system in the mobile memory card to start up the terminal.

In step 103, after it is detected that an operating system is stored in the mobile memory card, the terminal loads the operating system. The operation specifically may be: After the terminal executes the boot code, an operating system mirroring in the mobile memory card is loaded as booted by the boot--code. The terminal is started up after the operating system mirroring in the mobile memory card is loaded as booted by the boot code.

As described in Embodiment 1 of the present invention above, the method detects whether a mobile memory card is available on a terminal and whether an operating system is stored in the mobile memory card, and loads the operating system if the operating system is available. The method implements the function of loading an operating system from a mobile memory card to start up a terminal, and compared with the prior art, does not require programming of the operating system in a flash memory; the user may simply download the operating system into the mobile memory card and then use it as an operating system to be loaded when the terminal starts up. The operation method is simple, and the user enjoys better experience. Meanwhile, without necessity of programming multiple operating systems in a flash memory Flash, the terminal manufacturer's cost of purchasing the flash memory Flash is saved.

### Embodiment 2

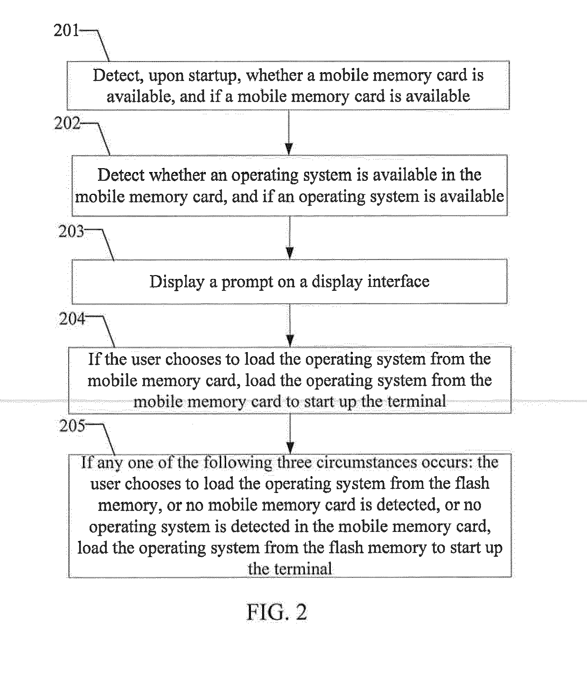

This embodiment of the present invention provides a method for using a mobile memory card to boot up a mobile phone operating system. The method is similar to the method provided in Embodiment 1, and increases terminal intelligence on the basis of Embodiment 1, so that if the operating system is programmed in a flash memory, a terminal can select whether to load the operating system in the Flash or to load an operating system stored in a mobile memory card according to a command of a user. As shown in FIG. 2, the method includes the following steps:

Step 201: A terminal detects, upon startup, whether a mobile memory card is available, and performs step 202 if a mobile memory card is available or performs step 205 if no mobile memory card is available.

When a power key (that is, power key) of the terminal is pressed to start up the terminal, a reset (that is, reset) signal is sent to a chip. The chip starts execution from a 0 address. Generally, the 0 address corresponds to a boot code segment in a read-only memory (ROM), and stores information such as basic initialization information. The operations for the boot code are the same as those in the prior art, and are not repeated here any further. After completion of running the initialization code segment, that is, the boot code, it is checked whether a mobile memory card is available. The mobile memory card may be an SD card, a TF card, or an MMC card, and the like. The mobile memory card described here is only an example, but not an exhaustive description, for ease of understanding the embodiment of the present invention, and shall not be construed as a limitation to the embodiment of the present invention.

Step 202: Detect whether an operating system is available in the mobile memory card, and perform step 203 if an operating system is available or perform step 205 if no operating system is available.

Step 203: Display a prompt on a display interface to remind a user that an operating system is available in the mobile memory card for selection and that an operating system is available in the flash memory for selection.

Step 204: If the user selects to load the operating system from the mobile memory card, load the operating system from the mobile memory card to start up the terminal.

Step 205: If any one of the following three circumstances occurs: the user selects to load the operating system from the flash memory, or no mobile memory card is detected, or no operating system is detected in the mobile memory card, load the operating system from the flash memory to start up the terminal.

As described in Embodiment 2 of the present invention above, the method detects whether a mobile memory card is available on a terminal and whether an operating system is stored in the mobile memory card, and loads the operating system if the operating system is available. The method implements the function of loading an operating system from a mobile memory card to start up a terminal, and compared with the prior art, does not require programming of the operating system in a flash memory; the user may simply download the operating system into the mobile memory card and then use it as an operating system to be loaded when the terminal starts up. The operation method is simple, and the user enjoys better experience. Meanwhile, without necessity of programming multiple operating systems in a flash memory Flash, the terminal manufacturer's cost of purchasing the flash memory Flash is saved.

If more than one operating system is stored in the mobile memory card, the method may give a prompt on the display interface to indicate all operating systems in the user terminal that are available for selection by the user.

Therefore, further, step 203 in the method may specifically include: displaying a prompt on the display interface to remind the user that more than one operating system is available in the mobile memory card for selection and that an operating system is available in the flash memory for selection.

Accordingly, step 204 may specifically include: if the user selects to load one of the operating systems from the mobile memory card, loading the operating system from the mobile memory card to start up the terminal.

As detailed in steps 203 and 204, if multiple operating systems are available in the mobile memory card for selection, the user may select one of the operating systems to serve the terminal as required, and hence enjoy better experience.

### Embodiment 3

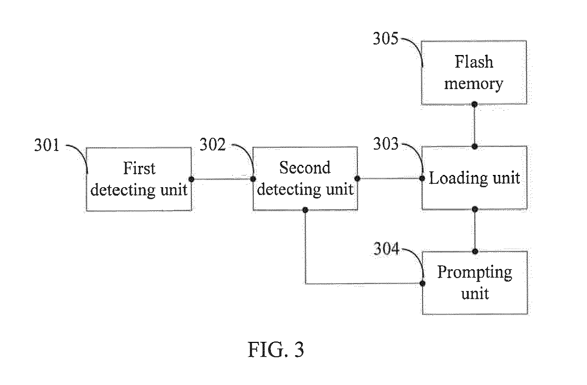

This embodiment of the present invention provides a terminal. As shown in FIG. 3, the terminal includes a first detecting unit 301, a second detecting unit 302, and a loading unit 303.

The first detecting unit 301 is configured to detect whether a mobile memory card is available upon startup, and notify the second detecting unit if a mobile memory card is available.

When a power key (that is, power key) of the terminal is pressed to start up the terminal, a reset (that is, reset) signal is sent to a chip. The chip starts execution from a 0 address. Generally, the 0 address corresponds to a boot code segment in a read-only memory ROM, and stores information such as basic initialization information. The operations for the boot code are the same as those in the prior art, and are not repeated here any further. After completion of running the initialization code segment, that is, the boot code, it is checked whether a mobile memory card is available. The mobile memory card may be a secure digital card (SD, Secure Digital Memory Card), a TF card, or an MMC card, and the like. The mobile memory card described here is only an example, but not an exhaustive description, for ease of understanding the embodiment of the present invention, and shall not be construed as a limitation to the embodiment of the present invention.

The second detecting unit 302 is configured to detect whether an operating system is available in the mobile memory card, and notify the loading unit if an operating system is available.

If the second detecting unit 302 detects that code of an operating system is stored in the mobile memory card, the loading unit may load the operating system; if code of more than one operating system is available in the mobile memory card, the terminal may give a prompt to a user and allow the user to select a desired operating system.

The loading unit 303 is configured to load the operating system in the mobile memory card to start up the terminal.

When it is detected that an operating system is stored in the mobile memory card, the loading unit 303 loads the operating system. The loading unit 303 is specifically configured to: after the boot code is executed, load an operating system mirroring in the mobile memory card as booted by the boot code; before the mirroring, the terminal mirrors the operating system in the mobile memory card to a random access memory (RAM, Random Access Memory). The terminal is started up after the operating system mirroring in the mobile memory card is loaded as booted by the boot code.

As described in Embodiment 3 of the present invention above, the terminal uses the first detecting unit to detect whether a mobile memory card is available, and uses the second detecting unit to detect whether an operating system is stored in the mobile memory card, and the terminal loads the operating system if the operating system is available. The terminal implements the function of loading an operating system from a mobile memory card to start up a terminal, and compared with the prior art, does not require programming of the operating system in a flash memory; the user may simply download the operating system into the mobile memory card and then use it as an operating system to be loaded when the terminal starts up. The operation method is simple, and the user enjoys better experience. Meanwhile, without necessity of programming multiple operating systems in a flash memory Flash, the terminal manufacturer's cost of purchasing the flash memory Flash is saved.

Further, the terminal may include a prompting unit 304 and a flash memory 305.

The prompting unit 304 is configured to display a prompt on a display interface if an operating system is detected in the mobile memory card to remind a user that an operating system is available in the mobile memory card for selection or that an operating system is available in the flash memory for selection.

Accordingly, the loading unit is specifically configured to: if the user selects to load the operating system from the mobile memory card, load the operating system from the mobile memory card to start up the terminal;
or, configured to: if any one of the following three circumstances occurs: the user selects to load the operating system from the flash memory, or no mobile memory card is detected, or no operating system is detected in the mobile memory card, load the operating system from the flash memory to start up the terminal.

The flash memory 305 is configured to store the operating system.

With the prompting unit and the flash emory added above, the terminal is capable of loading an operating system in different ways, that is, loading an operating system from a flash memory or from a mobile memory card, depending on the user's selection. Therefore, the terminal provides more diverse functions, and better experience for the user.

Further, the prompting unit 304 may be specifically configured to display a prompt on the display interface to remind the user that more than one operating system is available in the mobile memory card for selection and that an operating system is available in the flash memory for selection.

Accordingly, the loading unit 303 may be specifically configured to: if the user selects to load one of the operating systems from the mobile memory card, load the operating system from the mobile memory card to start up the terminal.

As detailed above with respect to the prompting unit and the loading unit, if multiple operating systems are available in the mobile memory card for selection, the user may select one of the operating systems to serve the terminal as required, and hence enjoy better experience.

Persons of ordinary skill in the art may understand that all or a part of the steps of the method in the embodiments may be implemented by a program instructing relevant hardware. The program may be stored in a computer readable storage medium. The storage medium may be a read-only memory, a magnetic disk, or an optical disk and the like.

Detailed above are a method and a terminal for using a mobile memory card to boot up a mobile phone operating system according to the present invention. Persons of ordinary skill in the art can make modifications with respect to the specific implementation manners and the application scope according to the ideas of the embodiments of the present invention, and the content of the specification shall not be construed as a limitation to the present invention.

## Claims

1. A method for using a mobile memory card to boot up a mobile phone operating system, comprising:
detecting, upon startup, whether a mobile memory card is available;
if it is detected that a mobile memory card is available, detecting whether an operating system is available in the mobile memory card; and
if it is detected that an operating system is available in the mobile memory card, loading the operating system to start up a terminal.

2. The method according to claim 1, further comprising:
if it is detected that an operating system is available in the mobile memory card, displaying a prompt on a display interface to remind a user that an operating system is available in the mobile memory card for selection and that an operating system is available in a flash memory for selection; wherein
the loading the operating system to start up a terminal specifically comprises:
if the user selects to load the operating system from the mobile memory card, loading the operating system from the mobile memory card to start up the terminal; or
if the user selects to load the operating system from the flash memory, loading the operating system from the flash memory to start up the terminal.

3. The method according to claim 2, wherein the displaying a prompt on a display interface to remind a user that an operating system is available in the mobile memory card for selection and that an operating system is available in a flash memory for selection specifically comprises:
displaying a prompt on the display interface to remind the user that more than one operating system is available in the mobile memory card for selection and that an operating system is available in the flash memory for selection; and
the loading the operating system to start up a terminal specifically comprises:
if the user selects to load one of the operating systems from the mobile memory card, loading the operating system from the mobile memory card to start up the terminal.

4. The method according to any one of claims 1-3, further comprising:
if no mobile memory card is detected or no operating system is detected in the mobile memory card, loading an operating system from a flash memory to start up the terminal.

5. A terminal, comprising a first detecting unit, a second detecting unit, and a loading unit, wherein:
the first detecting unit is configured to, upon startup, detect whether a mobile memory card is available;
the second detecting unit is configured to: if it is detected that a mobile memory card is available, detect whether an operating system is available in the mobile memory card; and
the loading unit is configured to: if it is detected that an operating system is available in the mobile memory card, load the operating system to start up the terminal.

6. The terminal according to claim 5, wherein the terminal further comprises a prompting unit and a flash memory; wherein:
the prompting unit is configured to display, if an operating system is detected in the mobile memory card, a prompt on a display interface to remind a user that an operating system is available in the mobile memory card for selection and that an operating system is available in the flash memory for selection;
the loading unit is specifically configured to load the operating system from the mobile memory card to start up the terminal if the user selects to load the operating system from the mobile memory card; and load the operating system from the flash memory to start up the terminal if the user selects to load the operating system from the flash memory; and
the flash memory unit is configured to store the operating system.

7. The terminal according to claim 6, wherein the prompting unit is specifically configured to display a prompt on the display interface to remind the user that more than one operating system is available in the mobile memory card for selection and that an operating system is available in the flash memory for selection; and
the loading unit is specifically configured to: if the user selects to load one of the operating systems from the mobile memory card, load the operating system from the mobile memory card to start up the terminal.

8. The terminal according to any one of claims 5-7, wherein the loading unit is specifically configured to: if no mobile memory card is detected or no operating system is detected in the mobile memory card load an operating system from a flash memory to start up the terminal.
